# EUROPÄISCHE PATENTSCHRIFT

(11) **EP 0 206 061 B1**
(45) Veröffentlichungstag und Bekanntmachung des Hinweises auf die Patenterteilung: **20.01.1993**
(21) Anmeldenummer: 86107759.2
(22) Anmeldetag: 06.06.1986
(51) Int. Cl.: A47C 7/18, B32B 5/24, A47C 27/00

(54) **Polsterung für Federkernsitze und Verfahren zur Herstellung derselben**
Upholstery for seats with a lightweight core and process for making it
Rembourrage pour sièges à armature légère et son procédé de fabrication

(30) Priorität: 25.06.1985 DE 3522612
(43) Veröffentlichungstag der Anmeldung: 30.12.1986
(73) Patentinhaber: Veenendaal Schaumstoffwerk GmbH, D-96215 Lichtenfels (DE)
(72) Erfinder: Remmert, Hans-Jürgen, D-6730 Neustadt a.d. Weinstrasse (DE)
(74) Vertreter: Werner, Hans-Karsten, Dr.Dipl.-Chem.

(56) Entgegenhaltungen:
- DE-A- 2 303 481
- DE-A- 2 701 431
- GB-A- 1 230 378
- US-A- 4 211 817

## Beschreibung

Die vorliegende Erfindung betrifft eine neue Polsterung für Federkernsitze, bestehend aus Polyurethanweichschaum und einem damit verbundenen Vlies, wobei
das Vlies in einer oder mehreren Lagen aus mindestens bis 180° C temperaturbeständigen Fasern besteht, welche vorzugsweise mittels eines thermoplastischen Bindemittels verbunden sind,
die Polyurethanweichschaumschicht offenporig ist, mindestens 5 Minuten bei 200° C temperaturbeständig ist, eine Dicke von mindestens 10 mm und ein Raumgewicht von mindestens 15 kg/m³ aufweist, und
der Verbund von Schaum und Vlies aus einem Heißschmelzkleber besteht, der eine Wärmestandfestigkeit von mindestens 120° C und eine Siegeltemperatur von unter 180° C aufweist, wobei die Differenz der Siegeltemperatur des Heißschmelzklebers und die Plastifizierungstemperatur des Bindemittels des Vlieses nicht mehr als 50° C beträgt,
sowie Verfahren zur Herstellung derselben.

Die US-A-4,211,817 betrifft ein Verfahren zur Herstellung einer gebundenen laminierten flexiblen Struktur. Hierbei wird ein dünnes Gewebe von Fasern mit Partikeln eines Vinylchlorids- und Vinylidenchlorid-Copolymers in Kontakt gebracht. Anschließend wird das Gewebe mit einer Schicht zellularen Materials belegt. Schließlich wird die unverbundene Struktur erhitzt und verpreßt.

Aus der DE-A-30 11 446 ist eine Polsterung für Federkernsitze in Fahrzeugen bekannt, welche aus Polyurethanschaumstoff und einem damit verbundenen Vlies auf Basis von Polyesterfasern besteht. Diese Polsterung hat sich an sich gut bewährt, weist jedoch noch den Nachteil auf, daß sie nur in ebenflächiger Form vorliegt und sich weder den Konturen des Federkerns anpaßt noch dem Überzug eine Konturform geben kann und daher zusätzlich nachträglich mit Hilfe von Durchzügen, die im Federkern verankert werden, unter Spannung verformt werden muß.

Dieser Arbeitsgang kann nur entfallen, wenn die Polsterung bereits so vorgeformt ist, daß sie sich den Konturen des Federkerns anpaßt und dabei biegesteif genug ist, daß ein aufgehefteter Überzug in der gewünschten Form gehalten wird.

Zu diesem Zweck sind bereits Laminate hergestellt worden, die aus einem vorgeformten Vlies bestehen und mit Polyurethanweichschaum hinterschäumt wurden. Diese Laminate sind jedoch qualitativ unbefriedigend, da eine derartige hinterschäumte Polyurethanschicht stets ein relativ hohes Raumgewicht hat und kostspielig ist. Weiterhin weisen derartige Polyurethanweichschäume aufgrund der anzuwendenden Rezepturen unbefriedigendes Druckverformungsverhalten auf.

Es ist ferner bekannt, flächige Abschnitte aus Polyurethanblockschaum spanabhebend, beispielsweise durch Formschnitt, zu geformten Gebilden zu schneiden oder aus mehreren Lagen dieses Materials zu konfektionieren. Hierbei müssen jedoch hohe Lohnkosten und hoher Materialabfall in Kauf genommen werden.

Geformte Polsterungen für Federkernsitze werden nach dem Stand der Technik überwiegend aus Gummihaar hergestellt, welches jedoch wegen seines hohen Gewichtes nach Möglichkeit durch leichtere Polstermaterialien ersetzt werden soll, die trotzdem zu einer gleichwertigen Polsterung führen.

Die Erfindung hat sich somit die Aufgabe gestellt, eine Polsterung für Federkernsitze, bestehend aus Polyurethanweichschaum und einen damit verbundenen Vlies, zu entwickeln, welche einfach und preiswert herzustellen ist, die Verwendung des bewährten Polyurethanblockschaumes als ebenflächigen Zuschnitt gestattet und ausreichend biegesteif ist, daß der darauf geheftete Überzug in der gewünschten Kontur gehalten wird und sich das überzogene Polsterteil den Konturen des Federkerns anpaßt.

Diese Aufgabe wird dadurch gelöst, daß
die Polsterung unter Einwirkung von Druck und Wärme verformt ist.

Die erfindungsgemäße Herstellung dieser Polsterungen erfolgt dadurch, daß man
a) ein Vlies in einer oder mehreren Lagen aus mindestens bis 180° c temperaturbeständigen Fasern, welche vorzugsweise mittels eines thermoplastischen Bindemittels verbunden sind, mit
b) einer offenporigen Polyurethanweichschaumschicht, die minestens 5 Minuten bei 200° C temperaturbeständig ist, eine Dicke von mindestens 10 mm und ein Raumgewicht von mindestens 15 kg/m³ aufweist, mittels eines Heißschmelzklebers, der eine Wärmestandfestigkeit von mindestens 120° C und eine Siegeltemperatur von unter 180° C aufweist, wobei die Differenz der Siegeltemperatur des Heißschmelzklebers und Plastifizierungstemperatur des Bindemittels des Vlieses nicht mehr als 50° C beträgt, miteinander verklebt und vorzugsweise gleichzeitig unter Einwirkung von Druck und Wärme verformt und in der Form unter Zuhaltung erkalten läßt.

Es war zwar bekannt, biegesteife Folien, beispielsweise Hart-PVC oder ABS, mit einer 2 bis 3 mm starken Schaumstoffschicht zu laminieren, um Dröhngeräusche zu vermeiden, die bei Kontakt von Formteilen aus solchen Folien mit Metallen entstehen. Bei diesen Artikeln bestimmt jedoch allein der biegesteife Kunststoff der Folie die endgültige Form. Die dünne Schaumstoffschicht hat praktisch keinen Einfluß auf die sonstigen mechanischen Eigenschaften der tiefgezogenen Kunststoffteile.

Es war keineswegs vorherzusehen, daß die erfindungsgemäße Kombination aus relativ dicken Schichten von Polyurethanweichschaum mit den relativ dünnen und elastischen Schichten des Vlieses durch die spezielle Art der Verklebung und Verformung dauerhaft verformt werden können, und somit in der Lage sind, die gestellte Aufgabe zu lösen. Dabei ist es jedoch notwendig, die oben genannten Merkmale und Eigenschaften der einzelnen Komponenten sowie die Verfahrensparameter einzuhalten, da andernfalls ungeeignete oder den Anforderungen nicht gerecht werdende Produkte entstehen.

So muß das Vlies aus mindestens bis 180° C, vorzugsweise sogar bis 200° C temperaturbeständigen Fasern bestehen, welche vorzugsweise mittels eines thermoplastischen Bindemittels verbunden sind. Geeignete Fasern sind sowohl Natur- als auch Kunstfasern, wie Polyamide, Kollagen, Polyester, Polyacrylnitril und Cellulose. Diese Fasern können als Stapelfaser, vorzugsweise aber auch als Endlosfasern eingesetzt werden. Endlosfasern sind mechanisch stabiler gegen Abrieb und führen daher zu noch besseren Produkten.

Als Bindemittel für die Vliese kommen insbesondere Polyacrylate, Polymethacrylate und Polyvinylproprionate in Frage. Diese werden vorzugsweise als Dispersionen eingesetzt. Prinzipiell sind aber auch Kunststoffe und Kunststoffdispersionen geeignet, die aus gleichem oder ähnlichem Material bestehen wie typische Heißschmelzkleber, nämlich Tripolymere vom Typ EVA, Copolymere von Polyamiden, lineare Polyurethane und Kunstharze, die zum Teil sogar auf Naturharzen basieren und beispielsweise zur Verleimung von Papieren eingesetzt werden.

Das Flächengewicht der Vliese kann zwischen 100 und 2000 g/m² gewählt werden in Abhängigkeit von der geforderten Belastbarkeit. Bevorzugte Materialien sind mit Polyacrylatdispersionen gebundene Vliese aus Endlosfasern von Polyestern und Polyacrylnitril. Das Vlies kann in einer oder mehreren Lagen angewandt werden.

Die Bindemittel des Vlieses sollten nach Möglichkeit eine Wärmestandfestigkeit von mindestens 100° C, vorzugsweise 120° C aufweisen. Die Plastifizierungstemperatur sollte unter 200° C, vorzugsweise unter 180° C liegen.

Insbesondere wenn nur eine geringere Verformung angestrebt wird, können auch Vliese eingesetzt werden, die vernadelt sind oder die durch ein nachträgliches Wärme- und/oder Kalandrierverfahren miteinander verbunden sind sowie Vliese, die bereits beim Spinnen miteinander verklebt wurden (sogenannte Spunbond-Ware).

Die verwendeten Heißschmelzkleber müssen unbedingt eine Wärmestandfestigkeit von mindestens 120° C und eine Siegeltemperatur von unter 180° C aufweisen, wobei die Differenz der Siegeltemperatur des Heißschmelzklebers und die Plastifizierungstemperatur des Bindemittels des Vlieses nicht mehr als 50° C, vorzugsweise nicht mehr als 20° C beträgt.

Besonders bevorzugt sind Heißschmelzkleber mit einem relativ breiten Plastifizierungsbereich und relativ hoher Viskosität im Klebebereich. Heißschmelzkleber, die einen relativ engen Plastifizierungsbereich haben und zu niedrig viskosen Produkten führen, können beim erfindungsgemäßen Verfahren dazu führen, daß sie entweder in den Schaum oder in das Vlies absacken und dadurch nicht mehr in ausreichendem Maße zur Verbindung von Schaumstoff und Vlies zur Verfügung stehen. Falls die Heißschmelzkleber durch das Vlies hindurchfließen könnten, würden sie sogar zu Verklebungen mit der Form führen. Optimale Ergebnisse werden erzielt, wenn das Bindemittel des Vlieses mit dem Heißschmelzkleber verträgliche Mischungen bildet. Das gleiche gilt bezüglich der Verträglichkeit des Heißschmelzklebers mit Polyurethan, da dies zu einer besonders guten und formstabilen Befestigung und Verfestigung der Polyurethanschaumstoffschicht im Grenzbereich führt.

Als Heißschmelzkleber kommen daher insbesondere Tripolymere auf Basis von EVA, Copolymere von Polyamiden, lineare Polyurethane und Kunstharze in Frage, die teilweise auf Naturharzen beruhen.

Die Heißschmelzkleber können prinzipiell auf verschiedene Weisen aufgebracht werden, beispielsweise als Folien, Netze oder gelochte Folien, als Streupulver oder vorzugsweise als Auftrag aus der Schmelze, und zwar ganzflächig oder rasterförmig. Besonders bevorzugt ist die Auftragung eines Heißschmelzklebers aus der Schmelze auf das Vlies und anschließende Verklebung und Verformung mit dem Polyurethanweichschaum.

Als Polyurethanweichschaum kommen prinzipiell alle offenporigen, weichelastischen Polyurethane in Frage, die sich in großen Blöcken herstellen lassen.

Besonders bewährt haben sich Polyurethanweichschäume auf Basis von Polyether-Polyolen. Diese Polyurethanweichschäume sind offenporig und mindestens 5 Minuten bei 200° C temperaturbeständig. Für die erfindungsgemäßen Polster sollen sie in Stärken von mindestens 10 mm vorliegen. In der Praxis werden Schichtdicken von 20 bis 50 mm eingesetzt. Das Raumgewicht der Polyurethanweichschäume muß mindestens 15 kg/m³ aufweisen. Vorzugsweise werden Raumdichten von mindestens 30 kg/m³ eingesetzt.

Die erfindungsgemäße Verformung unter Einwirkung von Druck und Wärme erfolgt in an sich bekannter Weise. Geeignet sind beispielsweise heizbare und kühlbare Doppelformen. Geeignet sind auch Stempel. Vorzugsweise wird die Verformung im Vakuum-Tiefziehverfahren mit Gummitüchern und gekühlten Formen durchgeführt. Gewünschtenfalls kann es zur Verbesserung der Formgebung von Vorteil sein, zusätzlich einen Oberstempel einzusetzen. Dazu werden das Vlies mit der bereits zuvor aufgetragenen Schicht des Heißschmelzklebers nach oben mit der Polyurethanweichschaumschicht bedeckt in eine seitlich luftdicht abgeschlossene Kammer gebracht, die in beliebiger Weise, etwa von oben mit einem Gummituch abgedeckt ist. Zunächst wird von unten mit Heißluft oder Infrarotstrahlern so weit aufgeheizt, daß die Klebschicht des Heizschmelzklebers plastifiziert, dann werden die Wärmequellen entfernt und von unten eine gekühlte Form herangeführt. Durch Anlegen von Vakuum drückt jetzt das Gummituch gleichmäßig mit ca. atmosphärem Druck auf die Schaumschicht und führt zum Verkleben und Verformen des Laminats. Es wird so lange gekühlt, bis das Bindemittel im Vlies, die Heißkleberschicht und die mit Heißkleberschicht durchsetzten Teile der Schaumstoffschicht erstarrt sind.

Das so erhaltende Produkt behält die vorbestimmte Form. In der Praxis haben sind Aufheizzeiten von 10 bis 100 Sekunden, vorzugsweise 20 bis 90 Sekunden, und Kühlzeiten von 60 bis 300 Sekunden bewährt. Nachdem das gebildete Laminat ausreichend erkaltet oder aktiv gekühlt wurde, kann es aus der Form herausgenommen werden. Die Laminate können in ähnlicher Weise wie die flachen Polsterungen gemäß DE-OS 30 11 446 gestapelt, gelagert, transportiert und verarbeitet werden, wobei jedoch die Polster sich unmittelbar an die Konturen des Federkerns anpassen und den aufgehefteten Überzug ohne weiteres in Konturform halten, ohne daß Überzug und Polster durch zusätzliche, im Federkern verankerte Durchzüge in die Kontur des Federkerns nachträglich eingezogen und darin verankert werden müssen.

Es wurde weiterhin festgestellt, daß die Rückstellfähigkeit der erfindungsgemäßen Polsterung weiter verbessert werden kann, wenn man zwischen dem Vlies und dem Polyurethanweichschaum ein Gitter aus bei 120 bis 180°C thermoplastisch verformbarem Kunststoff einlagert und das Vlies und die Polyurethanweichschaumschicht durch die Öffnungen des Gitters miteinander flächig verklebt werden.

Als thermoplastisch verformbare Kunststoffe für solche Gitter sind beispielsweise Polyethylen, Polystyrol, Polyvinylchlorid sowie Copolymerisate geeignet. Entscheidend ist, daß es sich um thermoplastische Materialien handelt, die im Temperaturbereich zwischen 120 und 180°C verformbar sind. Die Größe der Gitteröffnungen und die Dicke des Gitters sind so aufeinander abgestimmt, daß das Vlies und die Polyurethanweichschaumschicht durch die Öffnungen des Gitters hindurch flächig miteinander verklebt werden können.

Die flächige Verklebung sollte mindestens 20% der Gesamtfläche ausmachen, um eine ausreichende Haftung zu gewährleisten. Vorzusweise werden für das Gitter Kunststoffe verwendet, die auch mit dem thermoplastischen Bindemittel gut verkleben, so daß auch diese Flächen zur Stabilität und Haltbarkeit des Gesamtpolsters beitragen.

Als Kunststoffgitter können insbesondere handelsübliche Gitter aus extrudierten thermoplastischen Drähten verwendet werden, die als korrosionsbeständige Maschendrähte mit verschiedenen Drahtstärken und Maschenweiten erhältlich sind. So kommen insbesondere Gitter aus Polyethylendraht in Frage, die Drahtstärken von 1 bis 5 mm aufweisen und Maschenweiten von 10 x 10 bis 50 x 50 mm besitzen. Diese Gitter werden entweder zwischen die Gesamtflächen von Vlies und Polyurethanweichschaum eingelagert oder aber nur in dem Bereich der stärksten Verformung in den Sitzmulden. Bei der Herstellung der erfindungsgemäßen Polsterungen werden sie ebenfalls mitverformt und tragen nach dem Abkühlen erheblich zur Stabilität und Rückstellfähigkeit der Polsterungen bei.

Selbstverständlich können auch andere Arten von thermoplastisch verformbaren Gittern eingesetzt werden, zum Beispiel entsprechend gestanzte Folien oder gitterförmige Spritzgußteile.

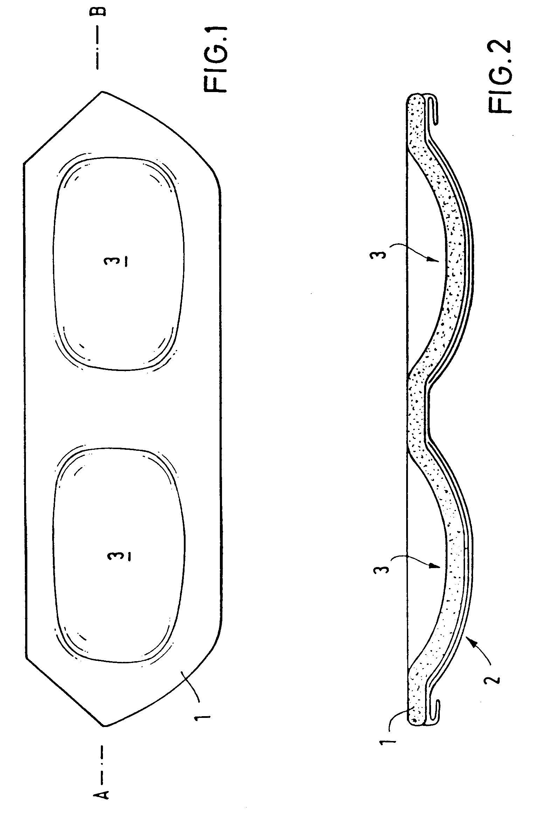

In der anliegenden Figur 1 ist eine Aufsicht auf eine erfindungsgemäße Polsterung gezeigt. In der Figur 2 ist ein Schnitt durch die Polsterung auf der Linie A-B gezeigt. In der Figur 3 ist eine erfindungsgemäße Polsterung mit einem eingelagerten Kunststoffgitter gezeigt.

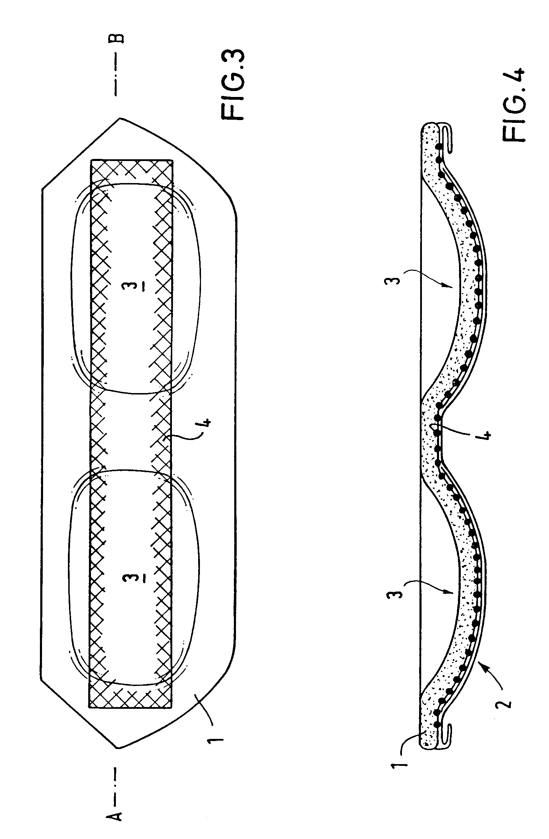

In der Figur 4 ist ein Schnitt durch die Polsterung auf der Linie A-B gemäß Figur 3 gezeigt. Hierin bedeuten
1 die Schaumstoffschicht,
2 das Vlies,
3 die Sitzmulden und
4 die Kunststoffgitter.

Die erfindungsgemäße Polsterung für Federkernsitze ist vorzugsweise für den Fahrzeugbau geeignet. Sie kann jedoch ohne weiteres auch für Sitzmöbel verwendet werden, wobei auch die zuvor erfolgte Verformung die weitere Verarbeitung erleichtert und zusätzliche, nachträgliche Durchzüge überflüssig werden.

Eine typische Ausführungsform der erfindungsgemäßen Polsterung sowie des Verfahrens zu seiner Herstellung sind in dem nachfolgenden Beispiel näher erläutert.

Ein Endlos-Wirr-Vlies aus Polyester-Faser mit einem Flächen-Gewicht von 250 g/m² wird auf einer Seite mit einem Heiß-Siegel-Kleber mit einem Erweichungspunkt von ca. 140° C in einer Menge von ca. 40 g/m² beschichtet.

Dieses beschichtete Vlies wird in den Umrissen des vorgesehenen Polsterteiles ausgestanzt. Ferner können aus dem beschichteten Vlies kleinere Flächen ausgestanzt werden, die in Form und Umfang dem am stärksten tiefzuziehenden Bereich des Polstersitzes entsprechen. Sie ermöglichen gewünschtenfalls eine zusätzliche Befestigung im herkömmlichen Sinne, können jedoch erfindungsgemäß wegfallen.

Eine 30 mm starke Schicht Ether-Polyurethanschaum mit einer Rohdichte von 45 kg/m³ wird ebenfalls in den Umrissen des zu fertigenden Polstersitzes ausgestanzt.

Auf den Formabdeckrahmen in einer Vakuum-Tiefzieh-Maschine wird dann aufeinandergelegt:
- Der große Vlies-Stanzling mit den Umrissen des Polsterteiles, die Kleberschicht nach oben,
- der oder die kleinen Vlies-Stanzlinge in einer Lage, die den am stärksten tiefzuziehenden Partien entspricht, darüber, die Kleberschicht nach oben,
- der Schaumstoff-Stanzling,
- über das Paket wird ein Gummituch vakuumdicht gespannt.

Der Heizstrahler wird unter das beschriebene Paket gefahren und innerhalb etwa 40 Sekunden der untenliegende große Vlies-Stanzling auf etwa 200° C erhitzt.

Der Strahler wird ausgefahren und umgehend die gekühlte Form-Matritze durch den Abdeckrahmen hochgefahren. Durch Anlegen von Vakuum wird das vorher beschriebene Paket aus Vlies und Schaum in die Form gedrückt, worin es innerhalb von etwa 80 Sekunden zum geformten Polsterteil erstarrt.

Danach kann der Polsterformling entnommen und zweckmäßig weiter verarbeitet werden.

Sofern ein Kunststoffgitter miteingelagert werden soll, wird dieses zuvor entsprechend zugeschnitten und auf den Vlies-Stanzling aufgelegt, so daß zumindest der zur verformende Bereich teilweise überdeckt wird. Es folgt dann wiederum der Schaumstoff-Stanzling. Über das Paket wird ein Gummituch vakuumdicht gespannt und wie oben beschrieben weiterverarbeitet.

## Patentansprüche

1. Polsterung für Federkernsitze, bestehend aus Polyurethanweichschaum und einem damit verbundenen Vlies, wobei
a) das Vlies in einer oder mehreren Lagen aus mindestens bis 180° C temperaturbeständigen Fasern besteht, welche vorzugsweise mittels eines thermoplastischen Bindemittels verbunden sind,
b) die Polyurethanweichschaumschicht offenporig ist, mindestens 5 Minuten bei 200° C temperaturbeständig ist, eine Dicke von mindestens 10 mm und ein Raumgewicht von mindestens 15 kg/m³ aufweist, und
c) der Verbund von Schaum und Vlies aus einem Heißschmelzkleber besteht, der eine Wärmestandfestigkeit von mindestens 120° C und eine Siegeltemperatur von unter 180° C aufweist, wobei die Differenz der Siegeltemperatur des Heißschmelzklebers und die Plastifizierungstemperatur des Bindemittels des Vlieses nicht mehr als 50° C beträgt, dadurch gekennzeichnet, daß
d) die Polsterung unter Einwirkung von Druck und Wärme verformt ist.

2. Polsterung gemäß Anspruch 1, dadurch gekennzeichnet, daß zwischen dem Vlies und dem Polyurethanweichschaum ein Gitter aus bei 120 bis 180°C thermoplastisch verformbarem Kunststoff eingelagert ist und das Vlies und die Polyurethanweichschaumschicht durch die Öffnungen des Gitters miteinander flächig verklebt sind.

3. Verfahren zur Herstellung von Polsterungen für Federkernsitze, bestehend aus Polyurethanweichschaum und einem damit verbundenen Vlies, wobei man
a) ein Vlies in einer oder mehreren Lagen aus mindestens bis 180° C temperaturbeständigen Fasern, welche vorzugsweise mittels eines thermoplastischen Bindemittels verbunden sind, mit
b) einer offenporigen Polyurethanweichschaumschicht, die mindestens 5 Minuten bei 200° C temperaturbeständig ist, eine Dicke von mindestens 10 mm und ein Raumgewicht von mindestens 15 kg/m³ aufweist, mittels eines Heißschmelzklebers, der eine Wärmestandfestigkeit von mindestens 120° C und eine Siegeltemperatur von unter 180° C aufweist, wobei die Differenz der Siegeltemperatur des Heißschmelzklebers und Plastifizierungstemperatur des Bindemittels des Vlieses nicht mehr als 50° C beträgt, miteinander verklebt, dadurch gekennzeichnet, daß man vorzugsweise gleichzeitig unter Einwirkung von Druck und Wärme verformt und in der Form unter Zuhaltung erkalten läßt.

4. Verfahren gemäß Anspruch 3, dadurch gekennzeichnet, daß zwischen das Vlies und die Polyurethanweichschaumschicht ein Gitter aus bei 120 bis 180°C thermoplastisch verformbarem Kunststoff eingelagert wird und das Vlies und die Polyurethanweichschaumschicht durch die Öffnungen des Gitters miteinander flächig verklebt werden.

## Claims

1. Upholstery for interior spring seats, consisting of polyurethane high-resilient foam and a fleece connected with it, wherein
a) the fleece consists of one or several layers of at least up to 180 °C temperature-resistent fibres, preferably connected by means of a thermoplastic binder,
b) the polyurethane high-resilient foam layer has an open-cell structure, being at least for 5 minutes temperature-resistant at 200 °C, showing a thickness of at least 10 mm and a weight per unit volume of at least 15 kg/m³ and
c) the composite structure of foam and fleece consists of a hot-melt adhesive, having a heat deflection temperature of at least 120 °C and a sealing temperature of below 180 °C, but the difference between the sealing temperature of the hot-melt adhesive and the plastication temperature of the binder of the fleece being not above 50 °C, characterized in that
d) the upholstery is deformed under pressure and heat.

2. Upholstery according to claim 1 characterized in that between the fleece and the polyurethane high-resilient foam a grid of plastic material thermoplastic at 120 to 180 °C is inserted, and the fleece and the layer of polyurethane high-resilient foam are bonded with each other by their surfaces through the open voids of the grid.

3. Process of fabrication of upholstery for insert spring seats, consisting of polyurethane high-resilient foam and a fleece connected with it, wherein
a)the fleece of one or several layers of at least up to 180 °C temperature resistant fibres, which are preferably connected by means of a thermoplastic binder, is bonded with
b) an open-cell polyurethane high-resilient foam layer, resisting to a temperature of 200 °C for at least 5 minutes, showing a thickness of at least 10 mm and a weight per unit volume of at least 15 kg/m³, by means of a hot-melt adhesive, of which the heat deflection temperature is at least 120 °C and the sealing temperature below 180 °C, and the difference between the sealing temperature of the hot-melt adhesive and the plasticating temperature of the binder of the fleece does not exceed 50 °C, characterized in that preferably at the same time under pressure and heat deformation is performed and solidified in the mould by locking.

4. Process according to claim 3, characterized in that between the fleece and the polyurethane high-resilient foam layer a grid of plastic material being thermoplastic at 120 up to 180 °C, is inserted, and the fleece and the polyurethane high-resilient foam layer are bonded to each other by the surfaces through the open voids of the grid.

## Revendications

1. Rembourrage pour sièges à ressort consistant d'une mousse souple de polyuréthane et d'une toison y jointe
a)la toison se composant d'une ou de plusieures couches de fibres thermostables à au moins 180 °C, de préférence associées à l'aide d'un liant thermoplastique,
b)la couche de mousse souple de polyuréthane ayant des cellules ouvertes, résistant à la température de 200 °C, au moins pendant 5 minutes, présentant une épaisseur d'au moins 10 mm et un poids volumique d'au moins 15 kg/m³ et
c)le composite de mousse et de toison comprenant une colle thermoplastique, qui présente une résistance à la chaleur d'au moins 120 °C et une température de soudure au-dessous de 180 °C, la différence de la température de soudure de la colle thermoplastique et la température de plastification du liant de la toison n'excédant pas 50 °C, caractérisée en ce que
d)le rembourrage est déformé sous charge et à chaud.

2. Rembourrage suivant la revendication 1 caractérisé en ce que, entre la toison et la mousse souple de polyuréthane, une grille de matière plastique, se déformant thermoplastiquement de 120 °C à 180 °C est insérée, et la toison et la couche de la mousse souple de polyuréthane sont collées entre elles par les surfaces à travers les fentes de la grille.

3. Procédé de fabrication de rembourrage pour sièges à ressort, consistant de la mousse souple de polyuréthane et d'une toison y jointe,
a)la toison en une ou plusieures couches de fibres thermostables à au moins 180 °C, de préférence associées à l'aide d'un liant thermoplastique, étant collée avec
b)une couche de mousse souple de polyuréthane à cellules ouvertes, qui résiste à une température de 200 °C, au moins pendant 5 minutes, présentant une épaisseur d'au moins 10 mm et un poids volumique d'au moins 15 kg/m³, à l'aide d'une colle thermoplastique, présentant une résistance à la chaleur d'au moins 120 °C et une température de soudure au-dessous de 180 °C, la différence de la température de soudure de la colle thermoplastique et la température de plastification du liant de la toison n'excédant pas 50 °C, caractérisé en ce qu'on déforme de préférence à la fois sous charge et à chaud et laisse refroidir dans la moule en serrage.

4. Procédé suivant la revendication 3, caracterisé en ce qu'il consiste à insérer entre la toison et la couche de mousse souple de polyuréthane une grille d'une matière plastique, thermoplastiquement déformable de 120 °C à 180 °C, et à faire coller la toison et la couche de mousse souple de polyuréthane par les surfaces à travers les fentes de la grille.
